# EUROPEAN PATENT APPLICATION

(11) **EP 3 196 520 A1**
(43) Date of publication of application: **26.07.2017**
(21) Application number: 15824208.1
(22) Date of filing: 22.07.2015
(51) Int. Cl.: F16K 17/30, F16K 17/20

(54) **PRESSURE REGULATING VALVE**

(30) Priority: 22.07.2014 CN 201410372694; 22.07.2014 CN 201420426126 U
(71) Applicant: Fisher Jeon Gas Equipment (Chengdu) Co. Ltd., Sichuan 610045 (CN)
(72) Inventor: ZHOU, Biao, Sichuan 610045 (CN); XIAO, Zhongyang, Sichuan 610045 (CN)
(74) Representative: Petraz, Gilberto Luigi
(86) International application number: PCT/CN2015/084849
(87) International publication number: WO 2016/011952

(57) **Abstract**

The present invention relates to a pressure regulating valve, comprising: an actuator (3) and a valve body (2), wherein a communicating passage (12) is arranged between a cavity of the valve body and a cavity of the actuator, a pressure tapping tube (13) is further arranged in the cavity of the valve body, one end of the pressure tapping tube is connected to the communicating passage and the other end of the pressure tapping tube is suspended in the air. By adopting the internal pressure tapping structure of the pressure regulating valve, the performance of the pressure regulating valve in the flow rate accuracy range is improved.

## Description

### Field of the Invention

The present invention belongs to the field of fluid control, and specifically relates to a pressure regulating valve, in particular to an internal-pressure-tapping-type pressure regulating valve.

### Background of the Invention

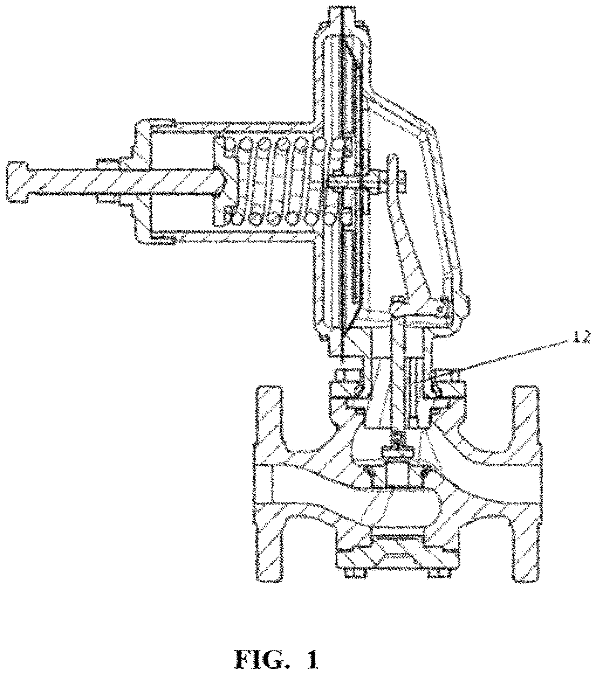

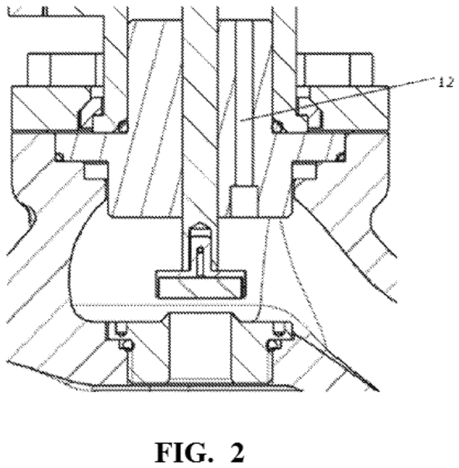

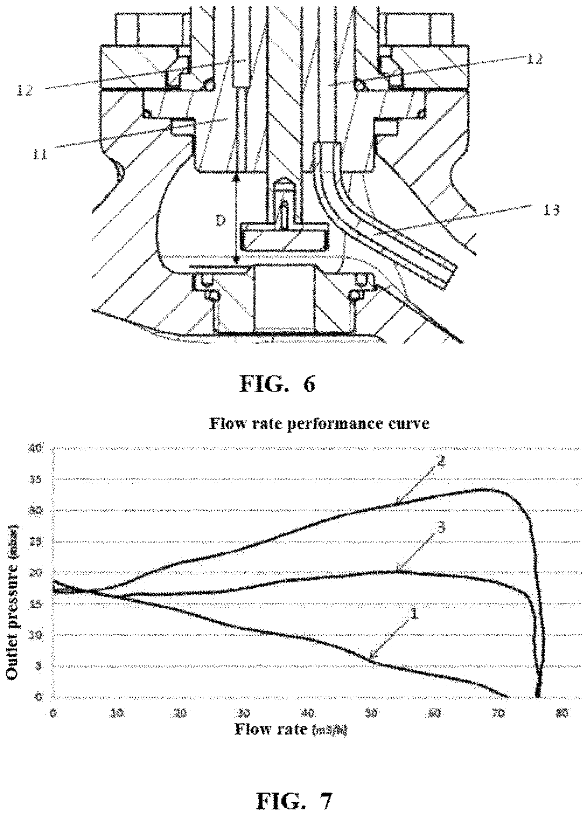

In the design of an internal-pressure-tapping-type pressure regulator, since downstream pressure needs to be directly obtained from the inside of the pressure regulator, a pressure tapping passage which communicates a valve body to downstream of an actuator is usually designed inside the pressure regulator. FIG. 1 is a schematic view of a pressure regulating valve of a direct-through internal pressure tapping structure. FIG. 2 is a direct-through internal pressure tapping structure in FIG. 1. In FIG. 1 and FIG. 2, an internal pressure tapping passage is a passage through which downstream gas is enabled to enter a lower cavity of the actuator and thereby downstream pressure is obtained. Curve 1 in FIG. 7 represents a performance curve chart in a direct-through internal pressure tapping mode illustrated in FIG. 1. From curve 1, it can be seen that the performance of the pressure regulator in the flow rate accuracy range is very poor and the pressure drop is too fast.

### Summary of the Invention

In order to solve the above-mentioned problem, the present invention provides an embodiment of a pressure regulating valve. The design of the internal pressure tapping structure of the pressure regulating valve improves the performance of a pressure regulator in a flow rate accuracy range.

The pressure regulating valve provided by the embodiment of the present invention comprises:
an actuator and a valve body,
a communicating passage being arranged between a cavity of the valve body and a cavity of the actuator,
a pressure tapping tube being further arranged within the cavity of the valve body, one end of the pressure tapping tube being connected to the communicating passage and the other end of the pressure tapping tube being suspended in the air.

The number of the above-described communicating passages is at least two and the pressure tapping tube is connected to at least one of the communicating passages.

The suspended end of the above-described pressure tapping tube is arranged in a direction along a flow direction of gas or liquid.

The cavity of the above-described valve body comprises a pressure inlet cavity and a pressure outlet cavity, and the pressure tapping tube is arranged in the pressure outlet cavity.

The above-described pressure regulating valve comprises
a valve rod and a valve seat, the actuator being capable of pushing the valve seat to move in the pressure inlet cavity or the pressure outlet cavity through one end of the valve rod; and
a guide means sleeved on the valve rod, the guide means being arranged between the valve body and the actuator, and the communicating passages being capable of being arranged on the guide means.

The above-described communicating passages are distributed on two symmetrical sides of an axis of the valve rod.

The above-described guide means may be integrally molded with the actuator.

The above-described communicating passages are cylindrical holes.

According to the embodiment provided by the present invention, by arranging the passages communicating the cavity of the valve body to the cavity of the actuator and the pressure tapping tube to sense downstream pressure of the valve body, the performance of too fast pressure drop of the pressure regulator in the flow rate accuracy range is improved.

### Description of the Drawings

FIG. 1 is a schematic view of a pressure regulating valve of a direct-through internal pressure tapping structure in the related art.
FIG. 2 is a direct-through internal pressure tapping structure in FIG. 1.
FIG. 3 is a schematic view of a pressure regulating valve of an internal pressure tapping structure with a pressure tapping tube provided by the embodiment of the present invention.
FIG. 4 is a single-hole internal pressure tapping structure with a pressure tapping tube in FIG. 3.
FIG. 5 is a schematic view of a pressure regulating valve of a dual-hole internal pressure tapping structure with a pressure tapping tube provided by the embodiment of the present invention.
FIG. 6 is a dual-hole internal pressure tapping structure with a pressure tapping tube in FIG. 5.
FIG. 7 is a performance curve chart in three pressure tapping modes in FIG. 1, FIG. 3 and Fig. 5.
FIG. 8 is a schematic view of another pressure regulating valve of a dual-hole internal pressure tapping structure with a pressure tapping tube provided by the embodiment of the present invention.

Description of reference signs: 11-guide means, 12-passage, 13-pressure tapping tube, 2-valve body, 21-pressure inlet, 22-pressure outlet, 23-valve cavity, 231-pressure inlet cavity, 232-pressure outlet cavity, 233-valve port, 3-actuator, 311-first diaphragm cap, 312-second diaphragm cap, 321-diaphragm, 322-first diaphragm plate, 323-second diaphragm plate, 331-spring, 332-regulating rod, 34-lever, 4-valve seat, 5-valve rod.

### Description of the Embodiments

The technical solution of the present invention will be further described below with reference to the drawings in combination with the specific embodiments.

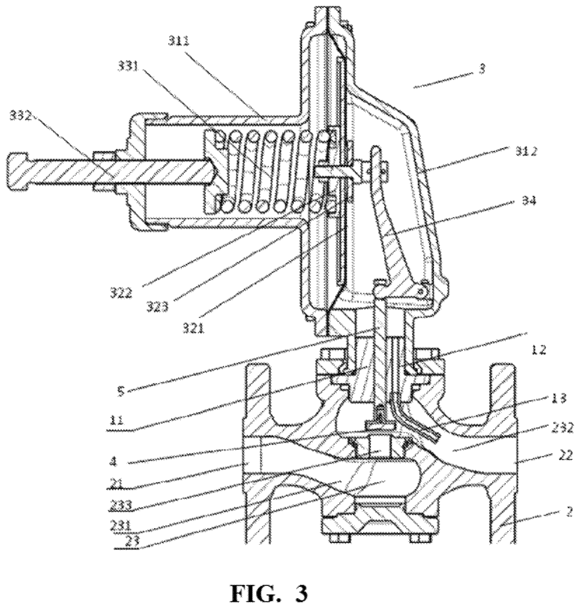

FIG. 3 illustrates a schematic view of a pressure regulating valve of an internal pressure tapping structure with a pressure tapping tube. The pressure regulating valve comprises a valve body 2, an actuator 3, a valve seat 4, a valve rod 5, a guide means 11 and a pressure tapping tube 13. Herein, the valve body 2 comprises a pressure inlet 21, a pressure outlet 22 and a valve cavity 23. The actuator 3 is fixedly connected to the valve body 2. The valve seat 4 is movably arranged in the valve cavity 23. The valve rod 5 comprises a first end and a second end, the first end of the valve rod is arranged within the actuator 3, the second end of the valve rod is fixed within the valve seat 4, and the valve rod 5 and the valve seat 4 can jointly move along an axis direction of the valve rod. The guide means 11 is fixed on the actuator 3 or the valve body 2. When the valve rod 5 moves, the guide means 11 guides the valve rod 5.

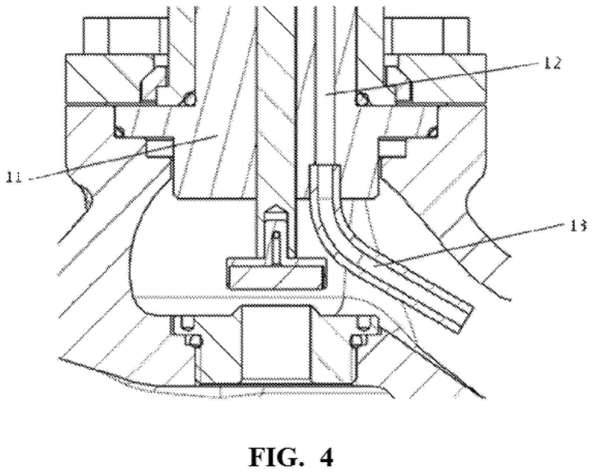

As illustrated in FIG. 3 and FIG. 4, the internal pressure tapping structure of the pressure regulating valve comprises a passage 12 communicating the actuator 3 to the valve cavity 23 and a pressure tapping tube 13, wherein the passage 12 is arranged on the guide means 11; one end of the pressure tapping tube is in communication with the valve cavity 23 and the other end of the pressure tapping tube is in communication with the passage 12.

The valve cavity 23 comprises a pressure inlet cavity 231 in communication with the pressure inlet 21, a pressure outlet cavity 232 in communication with the pressure outlet 22, and a valve port 233 communicating the pressure inlet cavity 231 to the pressure outlet cavity 232.

Since what needs to be obtained is the magnitude of the outlet pressure of the pressure regulating valve, the pressure tapping tube 13 is preferably arranged within the pressure outlet cavity 232 (because the pressure outlet cavity is located on a pressure outlet side), and at this moment the achieved pressure tapping effect is better.

For the pressure regulating valve provided by this disclosure, inlet pressure may be gas pressure and may also be liquid pressure, and correspondingly, outlet pressure may be gas pressure and may also be liquid pressure. If the pressure tapping tube is arranged along a flow direction of gas or liquid, the achieved pressure tapping effect is much better.

Curve 2 in FIG. 7 represents a performance curve in a pressure tapping mode illustrated in FIG. 3, i.e., a performance curve chart in a single-hole internal pressure tapping mode with a pressure tapping tube. From FIG. 7, it can be seen that the performance of the pressure regulating valve in the flow rate accuracy range is not good and pressure rise is too great.

Further, on the basis of FIG. 4, the inventor opens another pressure tapping passage in the other side, of the pressure tapping passage corresponding to the pressure tapping tube, relative to the valve rod, as illustrated in FIG. 6, such that pressure is simultaneously tapped from the two passages and finally the performance of the pressure regulator in the flow rate accuracy range is better.

Specifically, in the internal pressure tapping structure of the pressure regulating valve, two passages 12 communicating the actuator 3 to the valve cavity 23 are arranged on the guide means 11, wherein one passage 12 is in communication with the pressure tapping tube 13. Preferably, the two passages are distributed on two sides of the axis of the valve rod, wherein the achieved pressure tapping effect is better in the case of symmetrical distribution.

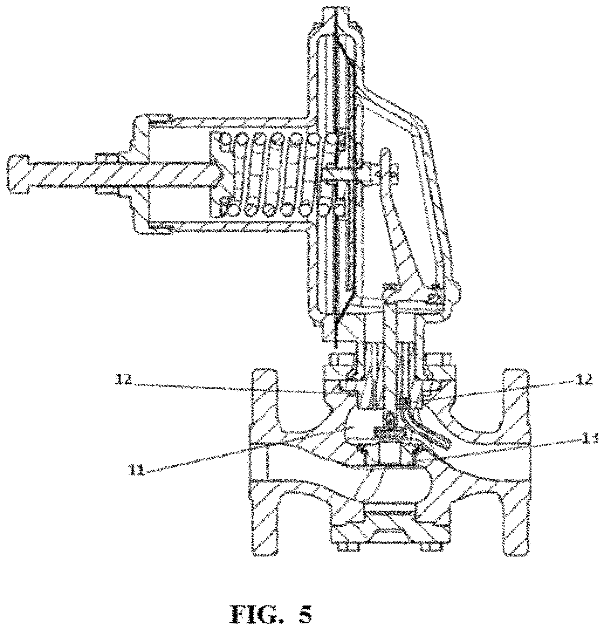

A pressure regulating valve applying a dual-hole pressure tapping mode is as illustrated in FIG. 5. Curve 3 in FIG. 7 represents a performance curve in a pressure tapping mode illustrated in FIG. 5, i.e., a performance curve chart in a dual-hole internal pressure tapping mode with a pressure tapping tube. From FIG. 7, it can be seen that, as compared with curve 1 and curve 2, curve 3 indicates that the performance of the pressure regulating valve in the flow rate accuracy range is greatly improved.

It needs to be stated that, in a design process, the position of the pressure tapping passage is not fixed but may be adjusted according to the need. In addition, the size and the number of the pressure tapping passages may also be adjusted depending on performance. In other words, the number of the pressure tapping passages may be more than two, and at this moment the pressure tapping tube may be in communication with only one of the passages.

In the design process, a vertical distance from the valve port to the pressure tapping passage may also be adjusted, so as to achieve performance which better satisfies the requirement. By taking FIG. 6 as an example, D represents the vertical distance from the valve port 233 to the pressure tapping passage 12, and the value of D may be adjusted in the design process of the valve according to the desired performance.

The above-described guide means 11 may also be integrally molded with the actuator 3.

The valve seat 4 connected to the valve rod 5 may be a rubber pad.

The above is a detailed description about the internal pressure tapping structure of this disclosure being applied to the pressure regulating valve illustrated in FIG. 3. Other parts of the pressure regulating valve will be described below. As illustrated in FIG. 3, the actuator comprises a diaphragm cap assembly, a diaphragm assembly, a pressure regulating means and a lever. Herein, the diaphragm cap assembly comprises a first diaphragm cap 311 and a second diaphragm cap 312, the first diaphragm cap 311 is connected to the pressure regulating means, the second diaphragm cap 312 is connected to the valve body 2, and the first diaphragm cap 311 mates with the second diaphragm cap 312 to form a hollow internal portion. The diaphragm assembly comprises a diaphragm 321, a first diaphragm plate 322 and a second diaphragm plate 323, the diaphragm 321 is pressed between the first diaphragm plate 322 and the second diaphragm plate 323, the diaphragm 321 is located between the first diaphragm cap 311 and the second diaphragm cap 312, the first diaphragm plate 322 is located within a cavity formed by the diaphragm 321 and the first diaphragm cap 311, and the second diaphragm plate 323 is located within a cavity formed by the diaphragm 321 and the second diaphragm cap 312. The pressure regulating means comprises a spring 331 and a regulating rod 332, the spring 331 is located inside the first diaphragm cap 311, the regulating rod 332 comprises a third end and a fourth end, the third end of the regulating rod penetrates through the first diaphragm cap 311 and is in contact with the spring 331, the fourth end of the regulating rod is suspended in the air and the regulating rod is fixed on the first diaphragm cap 311. The lever 34 illustrated in FIG. 3 comprises three connecting ends, i.e., a fifth end, a sixth end and a seventh end, wherein the fifth end of the lever is movably connected to the diaphragm assembly, the sixth end of the lever is movably connected to the first end of the valve rod 5, and the seventh end of the lever is movably connected to the second diaphragm cap 312.

It needs to be stated that the lever in FIG. 3 may also be other linkage parts or there is no structure of the lever.

The working principle of the pressure regulating valve illustrated in FIG. 3 is as follow: gas or liquid enters the valve from the pressure inlet along the pressure inlet cavity, and according to the need, the user sets the magnitude of the desired outlet pressure by regulating the magnitude of the spring force through the regulating rod. Under the effect of the spring force and the downstream pressure of the valve body (the downstream pressure of the valve body changes), the diaphragm moves leftwards and rightwards, the lever is driven to rotate, thus the valve rod is driven to vertically move, the size of the opening of the valve seat is changed, and thus the downstream pressure is changed till the magnitude of the outlet pressure reaches a stable value.

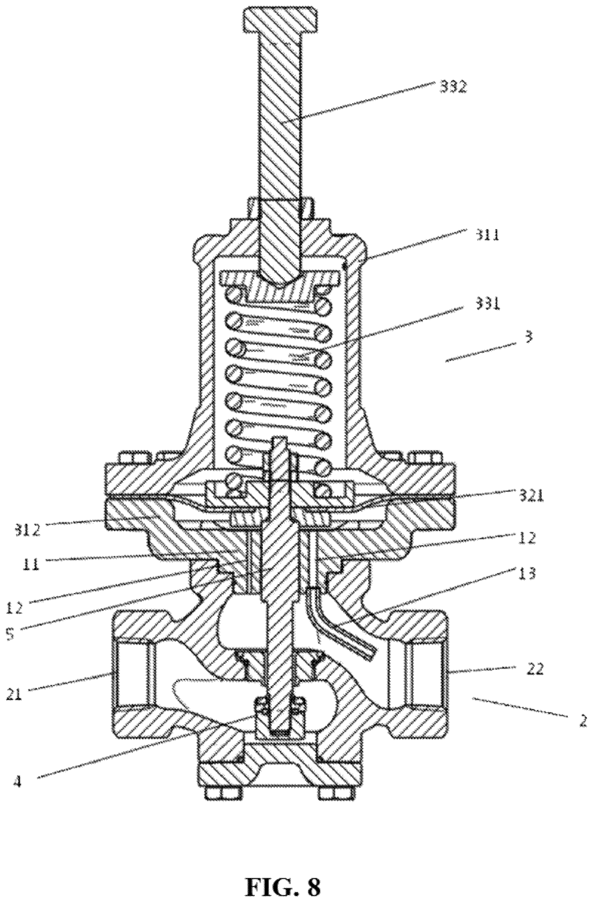

In FIG. 3, the guide means 11 is fixed on the second diaphragm cap 312 and the valve body 2 as an independent part. Of course, the guide means 11 may also be integrally molded with the second diaphragm cap 312 instead of being used as an independent part, as illustrated in FIG. 8 which is a schematic view of another pressure regulating valve of a dual-hole internal pressure tapping structure with a pressure tapping tube.

It needs to be stated that the internal pressure tapping structure provided by this disclosure may also be applied to pressure regulating valves of any structures but is not limited to be applied to the pressure regulating valve of the structure illustrated in FIG. 3. For example, as illustrated in FIG. 8 which is a schematic view of another pressure regulating valve of a dual-hole internal pressure tapping structure with a pressure tapping tube, the pressure regulating valve has no lever and still adopts a dual-hole internal pressure tapping mode with a pressure tapping tube. The same parts in FIG. 8 as in FIG. 3 herein adopt the same reference signs and are not repetitively described any longer.

With respect to the shape of the pressure tapping passage, the pressure tapping passages illustrated in FIG. 3, FIG. 5 and FIG. 8 are cylindrical holes. Of course, the pressure tapping passages may also be rectangular holes or others. FIG. 3 only illustrates one pressure tapping passage, and the diameters of an upper portion and a lower portion are the same; FIG. 5 illustrates two pressure tapping passages, wherein the diameters of an upper portion and a lower portion of the pressure tapping passage connected to the pressure tapping tube are the same, and the diameter of an upper portion of the passage on the pressure inlet side is greater than the diameter of a lower portion; and FIG. 8 illustrates two pressure tapping passages, wherein the diameters of an upper portion and a lower portion of each passage are the same but the diameters of the passage on the pressure inlet side is smaller than the diameter of the passage on the pressure outlet side. It needs to be stated that the influence on the performance of the pressure regulating valve in the flow rate accuracy range is not great when the upper portion and the lower portion of the pressure tapping passage have the same or different diameters; when the diameter of the passage is larger, the performance curve is enabled to be curved downwards; and when the pressure tapping tube is longer, the performance curve is enabled to be curved downwards.

As described above, the most important factor which influences the performance curve is whether the pressure tapping tube on the pressure outlet side is arranged along the flow direction of the gas or liquid, and the influence caused by the arrangement position of the pressure tapping passage to the performance curve is not great.

Exemplary embodiments are provided to enable this disclosure to be more complete and comprehensively convey the protection scope thereof to one skilled in the art. Many details such as examples of specific parts, devices and methods are set forth, so as to provide a comprehensive understanding of the embodiments of this disclosure. It is very obvious to one skilled in the art that, details do not need to be provided, and exemplary embodiments may be implemented in many different forms and shall not be explained as limitations to the scope of this disclosure. In certain exemplary embodiments, well-known processes, well-known device structures and well-known techniques are not described in detail.

Although terms such as "first", "second" and "third" and the like may be used here to describe various components, parts or portions, these components, parts or portions shall not be limited by these terms; and these terms shall be only used for distinguishing a component, part or portion. When terms such as "first", "second" and other numeric terms are used here, no sequence or order is indicated, unless otherwise it is clearly pointed out in the context. Therefore, the first component, part or portion described below may be explained as the term first component, part or portion without departing from the description of the exemplary embodiments.

Although various implementation modes of the present invention have been described here in detail, it shall be understood that the present invention is not limited to the specific implementation modes described and illustrated here in detail, and one skilled in the art may make other modifications and variations without departing from the essence and scope of the present invention. In addition, all components described here may be replaced with other technically equivalent components.

## Claims

1. A pressure regulating valve, comprising:
an actuator and a valve body,
a communicating passage being arranged between a cavity of the valve body and a cavity of the actuator,
**characterized in that** a pressure tapping tube is further arranged within the cavity of the valve body, one end of the pressure tapping tube is connected to the communicating passage and the other end of the pressure tapping tube is suspended in the air.

2. The pressure regulating valve according to claim 1, **characterized in that** the number of the communicating passages is at least two and the pressure tapping tube is connected to at least one of the communicating passages.

3. The pressure regulating valve according to claim 1 or 2, **characterized in that** the suspended end of the pressure tapping tube is arranged in a direction along a flow direction of gas or liquid.

4. The pressure regulating valve according to claim 3, **characterized in that** the cavity of the valve body comprises a pressure inlet cavity and a pressure outlet cavity, and the pressure tapping tube is arranged within the pressure outlet cavity.

5. The pressure regulating valve according to claim 4, **characterized in that** the pressure regulating valve comprises:
a valve rod and a valve seat, the actuator being capable of pushing the valve seat to move in the pressure inlet cavity or the pressure outlet cavity through one end of the valve rod; and
a guide means sleeved on the valve rod, the guide means being arranged between the valve body and the actuator, and the communicating passages being capable of being arranged on the guide means.

6. The pressure regulating valve according to claim 5, **characterized in that** the communicating passages are distributed on two symmetrical sides of an axis of the valve rod.

7. The pressure regulating valve according to claim 5, **characterized in that** the guide means may be integrally molded with the actuator.

8. The pressure regulating valve according to claim 1, **characterized in that** the communicating passages are cylindrical holes.
